# EUROPEAN PATENT SPECIFICATION

(11) **EP 1 775 177 B1**
(45) Date of publication and mention of the grant of the patent: **13.05.2015**
(21) Application number: 06020775.0
(22) Date of filing: 03.10.2006
(51) Int. Cl.: B60R 21/233

(54) **Airbag forming a recess**
Eine Einbuchtung ausbildender Gassack
Coussin gonflable formant un renfoncement

(30) Priority: 17.10.2005 US 252426; 28.01.2006 US 341791
(43) Date of publication of application: 18.04.2007
(73) Proprietor: KEY SAFETY SYSTEMS, INC., Sterling Heights, MI 48314 (US)
(72) Inventor: Pang, Hyusok, Rochester Hills Michigan 48309 (US); Shkoukani, Mutaz, Macomb Michigan 48044 (US); Kim, Soonsik, Rochester Hills Michigan 48309 (US); Yang, Jae-Sung, Bloomfield Michigan 48302 (US); Hariharan, Prem, Shelby Township Michigan 48317 (US); Padiyar, Prabhakar, Sterling Heights Michigan 48307 (US); Jung, Jin Ho, Rochester Hills Michigan 48307 (US); Sadenwater, Robert, Clarkston Michigan 48348 (US); Ju, Chang, Rochester Michigan 48307 (US)
(74) Representative: Gislon, Gabriele

(56) References cited:
- EP-A2- 1 364 838
- EP-A2- 1 580 083
- JP-A- 2005 247 118
- "SPLIT AIR BAG" RESEARCH DISCLOSURE, MASON PUBLICATIONS, HAMPSHIRE, GB, no. 395, March 1997 (1997-03), pages 191-192, XP000698581 ISSN: 0374-4353

## Description

This invention relates to passenger side airbags deployed from an instrument panel of a vehicle.

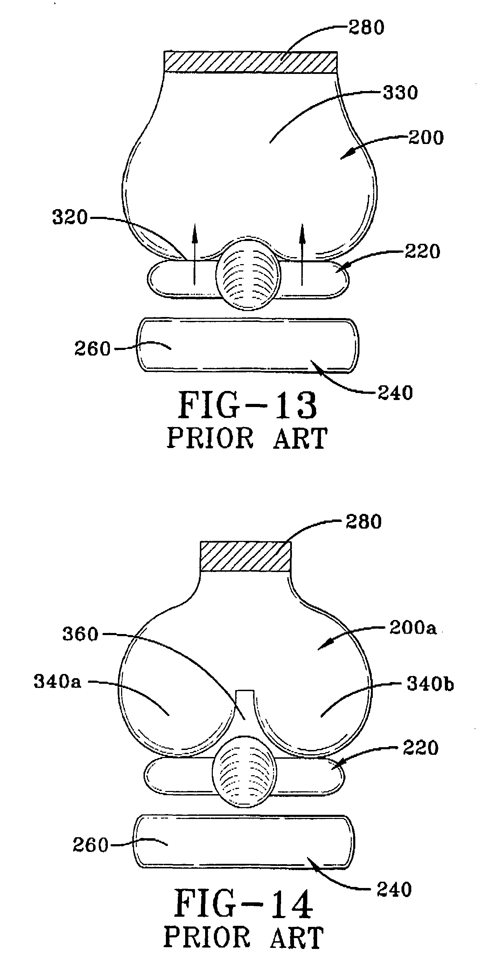

FIG. 13 shows a prior art conventional passenger side airbag 200 that is inflated by an inflator 280. The airbag 200 has a single inflatable chamber 330. The face portion or front panel 320 of the airbag 200 impacts a vehicle occupant 220 in the regions of the chest, shoulders and head. If the vehicle occupant's seated position at the time of airbag deployment deviates from the normal seated position by being too far forward relative to the seat back 260 of the seat 240, the impact of the airbag with the vehicle occupant increases.

Research Disclosure March 1997 - "Split Air Bag" discloses an air bag according to the preamble of claim 1, having a central recess that extends for about three quarters of the diameter of the air bag chamber.

In the United States of America the National Highway Transportation Safety Administration test criteria of a 1 year old, a 3 year old, a 6 year old; a 47.6 kg female (5^{th} percentile) are each considered sufficiently different to warrant separate criteria for airbag deployment beyond that of a normal size and weight adult vehicle occupant. Similarly, pregnant women have unique requirements to insure survivability of the infant they are carrying. These and other factors make the design and construction of such safety devices very complex.

The vehicle occupant safety restraints industry attempts to provide vehicle occupant restraint devices with a maximum range of safety for the greatest number of potential uses at the highest possibility reliability while still being affordably priced. In science and engineering a constant truth is that "simplicity leads to reliability". The trend toward complex sensors and controls increases the number of components, which leads to increasing the risk of a component malfunction that reduces the overall reliability. Engineers are forced to design in redundancy that further increases cost.

Fig. 14 shows another prior art airbag 200a of a type proposed in JP 2005162195, JP 2005247118, US 2004/0232681 A1, and US 2004/0155439 A1. The prior art airbag 200a has spaced apart lobes 340a, 340b, separated by a groove or space 360. When this airbag 200a is inflated the space or groove 360 is positioned in front of a normally positioned vehicle occupant 220 to avoid a high impact contact with the vehicle occupant's head. The vehicle occupant contacts the airbag 200a primarily between the lateral lobes 340a, 340b in relation to the right and left sides of the vehicle occupant's torso and shoulders. Compared to the prior art airbag 200 of Fig. 13, the impact is lessened if the vehicle occupant 220 is out of position relative to the center of the seat 240 or the seat back 260 at the beginning of airbag deployment.

To date none of the systems commonly used can accommodate the deployment of an airbag towards an infant in an infant seat facing the rear of a vehicle in the front seat of a vehicle. Accordingly all vehicle manufacturers provide warnings against such an occurrence.

The present invention provides in accordance with Claim 1 an airbag that can meet the test criteria for a 1 year old infant, a 3 year old, a 6 year old and a 5^{th} percentile woman while still meeting the design standards for a 50^{th} percentile adult passenger.
FIG. 1 is perspective view of an airbag according to the present invention shown in a deployed and inflated condition.
FIG. 2 is a top view looking down at the airbag of FIG. 1.
FIG. 3 is a front view of the airbag of FIG. 1.
FIG. 4 is a perspective view of the airbag of FIG. 1 with most of the left side panel removed to show the internal tethers and diffuser components.
FIG. 5 is the perspective view of FIG. 4 with both side panels removed.
FIGs. 5A through 5H are plan views of the various airbag components shown prior to being sewn together.
FIGS. 6A through 6H are plan views of an alternative embodiment of the airbag showing the panels and other components in plan view prior to assembly.
FIG. 7 is a diagrammatic view of an inflated airbag showing the the Grooved Air Bag of earlier filed priority application US 11/252,426.
FIG. 7A is an isometric view of the airbag of FIG. 7 shown inflated in relation to a vehicle's windshield and seat.
FIG. 8 is an exploded view of the various airbag components of the airbag of FIG. 7 shown prior to being sewn together.
FIG. 9 is a side plan view illustrating one of the side panels of the airbag of FIG. 7, as well as a center panel and a tether shown in dotted and dashed line.
FIG. 10 shows an alternative for a component of the airbag of FIG. 7.
FIG. 10A shows another alternative of the airbag of FIG. 7.
FIG. 11 shows a further alternative of the airbag of FIG. 7.
FIG. 12 shows still another alternative of the airbag of FIG. 7
FIG. 13 is a top view of one type of prior art passenger airbag.
FIG. 14 is a top view of another type of prior art passenger airbag.
FIG. 15 is a cross sectional view of an exemplary inflator that can be used in combination with the airbag of the present invention.

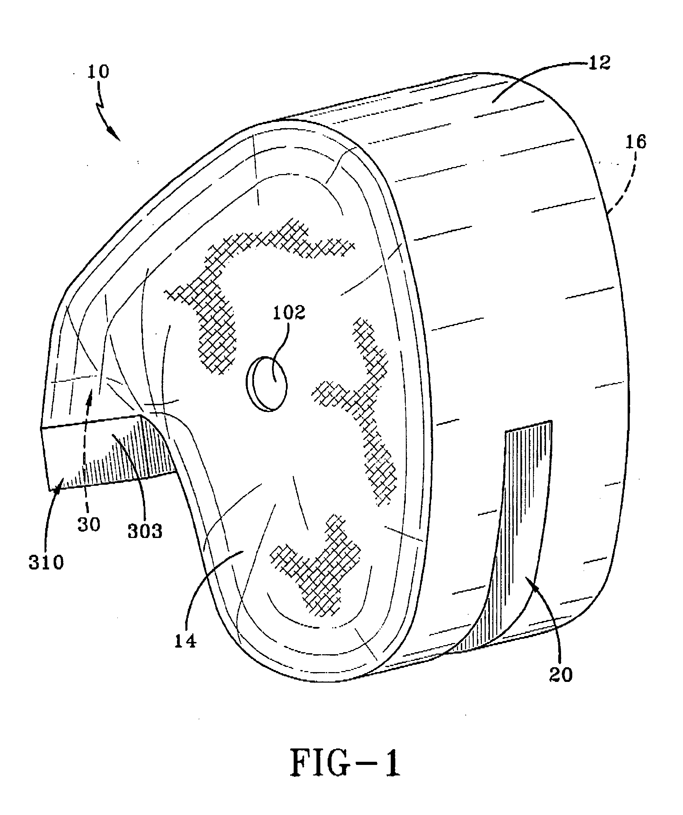

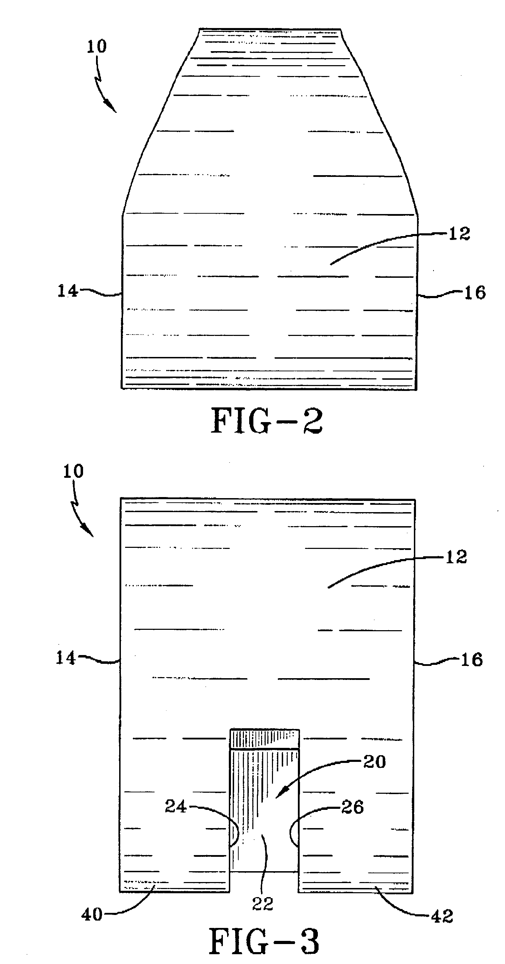

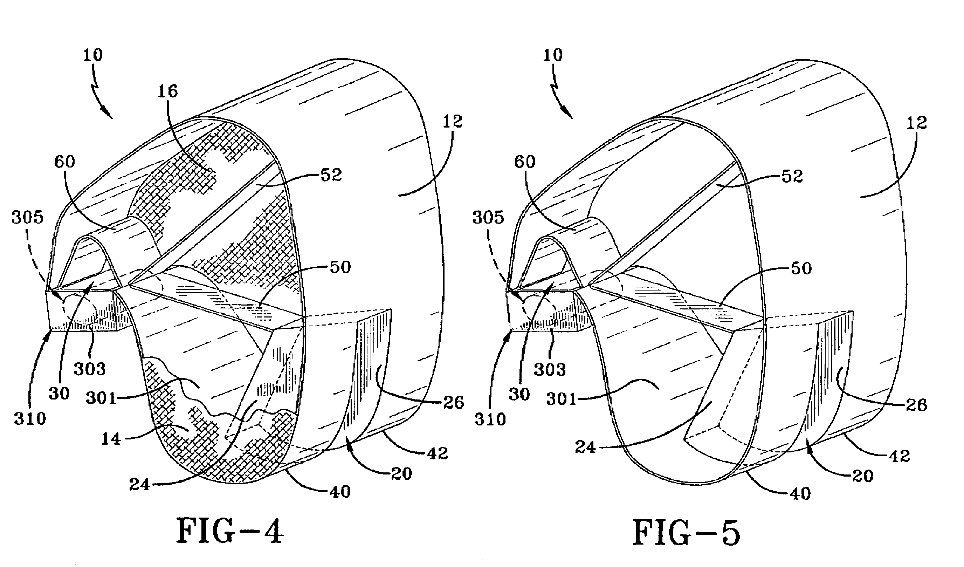

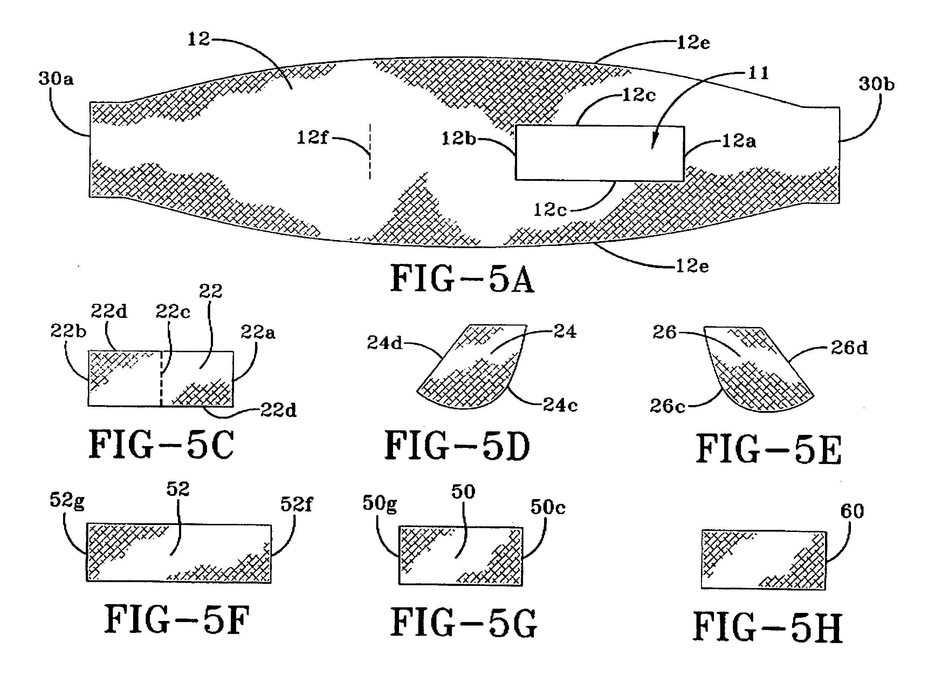

FIG. 1 shows an airbag 10 according to the present invention that has a main panel 12 and two side panels 14,16. The main panel 12 has a top portion, a front portion and a bottom portion and as shown in FIG. 5A can be made from a single panel of airbag fabric. The combination of the main panel 12 and side panels 14, 16 define a single inflatable chamber 301. The inflatable chamber 301 has an opening formed by the ends of the main panel cooperating with the side panels to create a passageway 30 that allows inflation gas to enter the inflatable chamber 301 and inflate the airbag 10, In FIG. 1 a recessed portion 20 of the airbag is shown. The recessed portion 20 illustrated in FIG. 3 has a center recess panel 22, a left recess panel 24 and a right recess panel 26, the combination of which forms a recessed portion 20 within the main panel 12. The term "recess" as used herein and in the claims means a concavity in the surface, such as an enclosure that is set back or indented. This recessed portion 20 divides the airbag 10 into two lobe portions 40, 42. The lobe portions 40, 42 are spaced apart by the recessed portion 20 in an amount sufficient to allow each lobe portion to act somewhat independently upon inflation. In FIG. 3 the lobe portions 40, 42 are in the front and lower portions of the main panel 12 when the airbag is in a fully deployed state and are fully open to form a part of the single inflatable chamber 301.

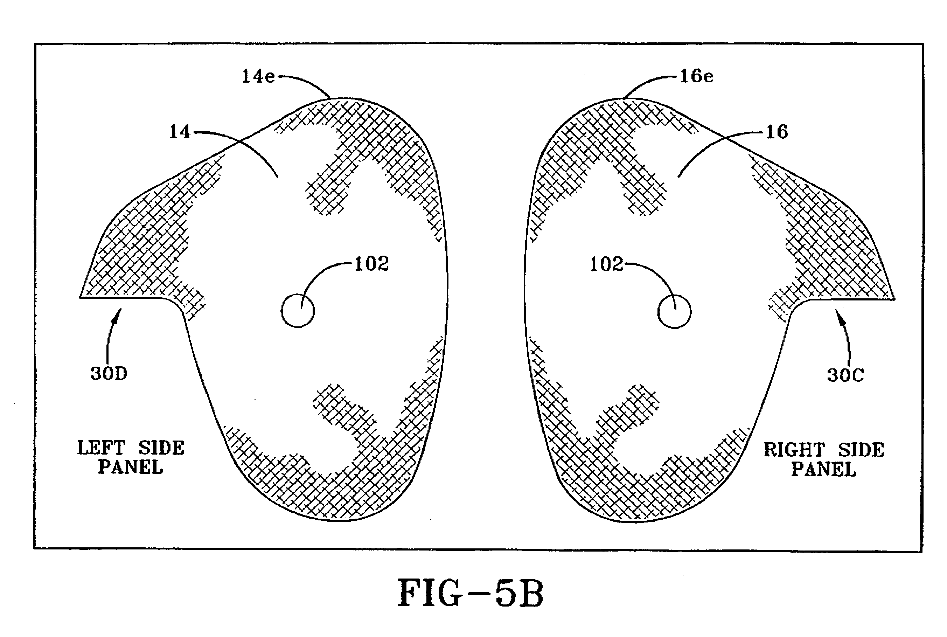

FIGs. 4 and 5 show the airbag 10 deployed with one or both side panels 14, 16 removed so that the inflatable chamber 301 of the airbag 10 can be more easily observed. In the interior of the airbag 10, the center recessed panel 22 of the recessed portion 20 is connected to a tether 50. The tether 50 extends towards the gas inlet passageway 30. The gas inlet passageway 30 mates with and is attached to an airbag module housing 303 adapted to house both the airbag 10 and an inflator 305 to form an airbag module assembly 310. When a crash sensor senses a crash an actuating signal is sent to the inflator 305 that provides gases to inflate and propel the airbag 10 from the instrument panel of the vehicle. The airbag 10 near the gas inlet passageway 30 has an end attached to the module housing 303 or another component of the module to secure the airbag. The forward movement of the recessed portion 20 is limited by the tether 50. Preferably, a second tether 52 is provided that further restrains the upward movement and forward movement of the airbag 10 in such a fashion that both the upper portion of the airbag 10 and the lower portion of the airbag 10 are restrained from excess forward movement by the tethers. When the term "forward" is used herein and in the claims with respect to the deployment of an airbag it is understood to mean a direction toward a vehicle occupant.

A diffuser element 60 is shown in Fig. 5H is a separate fabric component; but the diffuser element 60 may be an integral part of one or both of the tethers 50, 52. in either form the diffuser element 60 provides a means for deflecting the flow of inflation gases entering the airbag laterally towards the side panels 14, 16 as the airbag is unfolding. As a direct result of the position of the diffuser element 60 the gas flow is not in a straight line. The inflation gas follows a path that is first laterally directed toward either side of the airbag 10 and then moves forward which helps slow airbag deployment.

The recessed portion 20 is located only at a lower portion of the deployed airbag that extends vertically from the front portion to the bottom portion of the main panel 12. The recessed portion 20 is located at or below the location of the gas inlet passageway 30 relative to a horizontal plane passing through the gas inlet passageway when the airbag is deployed. The gas inlet passageway 30 has the inflation gas moving in an upward direction and then deflected by the diffuser element 60. The recessed portion 20 that is attached by the tether 50 moves outwardly as the airbag 10 is deployed to a point at which the tether 50 becomes taut. At such a point the recessed portion 20 can no longer extend forward towards the vehicle occupant, however, the side lobe portions 40, 42 continue to inflate and they can absorb the impact of the vehicle occupant as he moves forward during a vehicle crash. Preferably one or more vent openings 102 are strategically positioned on each side of the airbag 10 to facilitate deflation of the airbag after deployment and interaction with the vehicle occupant. Each vent opening 102 is sized to permit a release of gases from the airbag. The vent openings 102 are located in an upper portion on each side panel about midway between the inlet passage 30 and the front portion 12 and above each lobe portion 40, 42. The lobe portions 40, 42 provide a lower force cushioning effect that is less severe than the top portion of the airbag 10. Each lobe portion 40, 42 is free to move and deflect inwardly both laterally on the side as well as internally relative to the recessed portion 20. An out of position vehicle occupant might compress one lobe portion more than the other lobe portion, but due to the structure of the single inflatable chamber 301 being fully open to that portion created within the lobe portion an easy deflection of this portion is possible such that a small child or infant will not receive a full impact of a conventional airbag upon deployment. The lobe portion 40, 42 can deflect in both directions laterally and also rearwardly back towards the instrument panel. The airbag geometry is such that a small child or out of position child or a passenger seated close to the airbag will be struck by one or both of the lobe portions 40, 42. The lobe portions being easily deflected reduces the amount of force applied to the vehicle occupant to greatly reduce the risk of injury. If the vehicle occupant is perfectly centered then portions of both lobe portions 40, 42 can contact him as well as the recessed portion 20 which is restrained by the tether 50 as the airbag 10 inflates.

The airbag geometry provides a low deployment force directed at the vehicle occupant at the lower portion of the airbag 10 where children and infants are most vulnerable. The upper portion of the airbag 10 beyond the recessed portion 20 provides a more conventional single faceted airbag that is more than capable of providing sufficient cushioning for an adult vehicle occupant. The airbag 10 can perform satisfactorily when inflated by a single stage inflator, many examples of which are well known. The airbag 10 is functional with dual stage pyrotechnic and hybrid inflators and is not limited to use with single stage inflators.

The new U.S.A. regulations requiring that airbags be suitable for a generic family of vehicle occupant sizes means that either airbag systems will become far more complex or the systems will have sensors that will prevent deployment of the airbag. The present invention satisfies all these requirements without requiring shutting off the airbag under certain circumstances. Under all conditions including slow speed crashes at 40 kilometers per hour or less, the vehicle occupants can be safely cushioned by the airbag without the risk of having a an airbag propelled towards the vehicle occupant with too high of a force that could cause injury.

FIGs. 5A through 5H illustrate each of the components or panels used to make the airbag of the present invention. These panels are typically made of woven airbag fabric of nylon or polyester. In FIG. 5A the main panel 12 forms a top, a bottom and a front portion of the airbag 10. The main panel 12 has a symmetrical configuration wherein both of its ends 30a, 30b neck or narrow down to provide a portion of the gas inlet passageway 30. An opening 11 is surrounded by edges 12a, 12c, 12b, 12c of the opposite side. As shown the opening 11 is rectangular in shape.

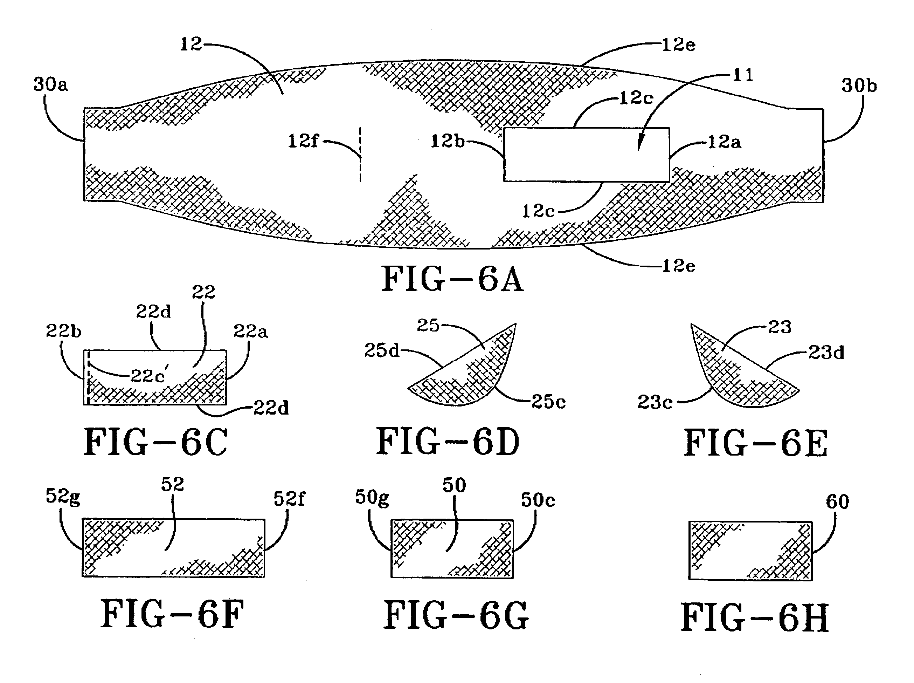

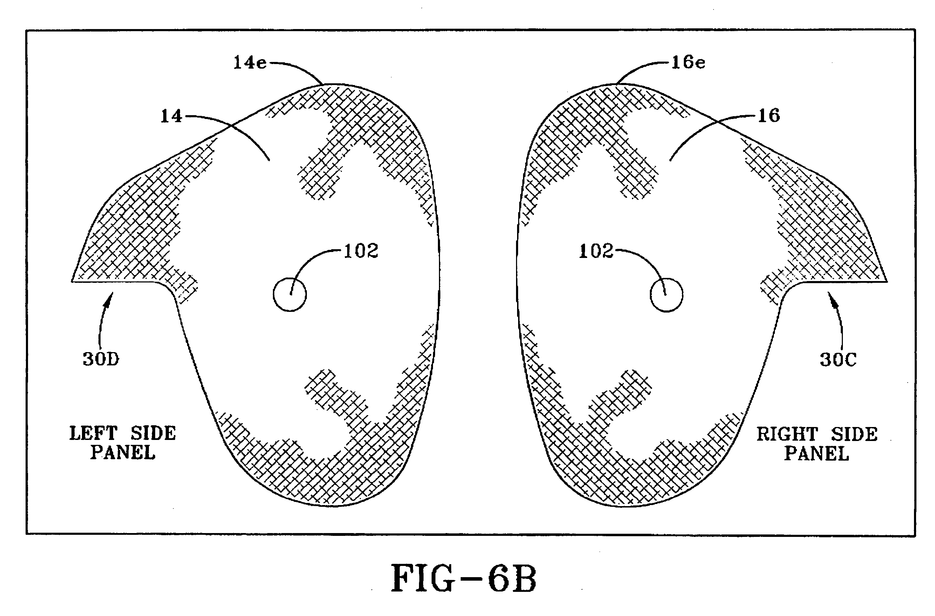

FIG. 5B shows the side panels 14, 16 for the left and right sides of the airbag. The side panel 14 is for the left hand side of the airbag whereas the right hand side 16 of the airbag is illustrated being a mirror image of the side panel 14. Each of the panels 14, 16 has a portion 30d, 30c to provide a portion of the gas inlet passageway 30. Vent openings 102 are provided as shown in FIGs. 5B and 6B on each side panel 14, 16. The edges 14e, 16e of the side panels are attached to the front main panel along the lateral edges 12e of the main panel. The edges of these panels can be sewn or otherwise affixed to one another to make the inflatable chamber 341. The opening 11 in the main panel is provided with a right hand recess panel and a left-hand recess panel 26, 24. The right and left hand recess panels 24, 26 are sewn along their curved edges 24c, 26c to an edge 12c of the opening 11 in the main panel. Once sewn to each edge 12c of the rectangular opening 11, the side recess panels 24, 26 are then sewn at their straight edges 24d, 26d to the center recess panel 22 along edges 22d of the center recess panel. The recessed portion 20 has a pocket shape that closes the entire opening 11 of the main panel 12. What in the deployed airbag will be the top and bottom edges 22a, 22b of the center recess panel 22 are sewn to the corresponding edges 12a, 12b of the opening 11 in the main panel.

in FIGs. 5F and 5G two tethers 50, 52 are provided, In FIGs. 4 and 5 the tether 50 is connected to the center recess panel 22 along a sewn line 22c at location 50c on the tether 50. The opposite end 50g of the tether 50 is preferably sewn or attached at or near the bottom end 30b of the main panel 12 near the passageway 30 that is formed by the assembly of the main panel 12 and the two side panels 14, 16. Preferably the tether 50 is centered on the main panel 12 and sewn in that location.

FIGs. 4, 5 and 5F show the second tether 52 attached to the main panel 12 at a location 12f with the end 52f being sewn there. At the opposite end 52g the tether 52 can be attached near the passageway 30. Although not shown, a tether 50, 52 can be provided with an extension that can form all or a portion of the diffuser element 60 which can either be an integral component of a tether 50, 52. In FIG. 5H the diffuser element 60 is a separate component in which case both ends would need to be sewn to the main panel 12 traversing the passageway 30 on both sides of the main panel 12. The tether 52 secures the airbag 10 at an upper portion near or on the top portion of the main panel 12 such that in a fully extended position it has a slight vertical inclination and projects outwardly at about 45 degrees relative to the gas inlet passageway 30. This provides restraint of the upward movement of the airbag. The lower tether 50 projects outwardly either horizontally or preferably slightly below the gas inlet passageway 30 and is attached to the center recess panel 22 which holds the recessed portion 20 open so that upon inflation the recessed portion 20 maintains its open recessed shape relative to the inflatable chamber 301.

An alternative embodiment is shown in FlGs. 6A through 6H that is substantially identical to that as shown in the FIGs. 1 through 5H. In FIGs. 6D and 6E the right and left recess panels 25, 23 have a curved side 23c, 25c with the ends of the curved side connected by a single straight side 23d, 25d such that the outer contour of the airbag is maintained in a curvilinear fashion as previously shown. However, the recessed portion 20 initiates at a point in both locations as opposed to having a deepened flat upper portion as shown in the first embodiment. In this embodiment the tether 50 should be attached preferably at a location 22c to the lower portion of the recess along the lower corner at the location where the side recess panels 23, 25 intersect the main panel 12. The recessed portion 20 is held in the open position at generally one end of the semicircular recess panels 23, 25.

The airbag 10 can be modified such that the recessed portion 20 as formed can have a more complex configuration, however, the recessed portion 22 should be tethered such that forward movement of the recessed portion is restrained and that the lobe portions 40, 42 can independently interact with a vehicle occupant. The airbag can easily deform and collapse in that region in such a fashion that the vehicle occupant will not be taking the full force of the deploying airbag 10 in the lower portion, as would be the case in the upper portion of the airbag striking an adult vehicle occupant. As shown the center recess panel 22 and the opening 11 are rectangular and of similar width. The center recess panel can be made wider or narrower relative to the opening 11 such that the side panels are inclined making tapered sidewalls of the recessed portion 20. The recess center panel 22 and the opening 11 can be oval or trapezoidal in shape or larger at the bottom of the recessed portion 20 and narrower as the recessed portion 20 extends toward the upper portions.

The airbag 10 has at least one tether attached to the center recess panel 22 at a location about halfway between the upper and lower ends 22a, 22b. The length of an upper tether 52 is greater than or equal to the sum of the length of the tether 50 attached to the center recess panel 22 and the distance from the location where the tether 50 is attached to the center recess panel 22 to the main panel 12 extending along the side recess panels 24, 26; 23, 25. The recess portion 20 preferably has a width in the inflated airbag of at least 25% of the width of the front portion of the main panel 12, preferably between 25% and 35% of the overall width. The overall length of the recess can be varied between 40% and 65% of the overall airbag height. The recessed portion 22 has a maximum depth as measured along one of the side recess panels at or below a vertical point of along the side recess panel that preferably is at least equal to or greater than the width of the recessed portion 22.

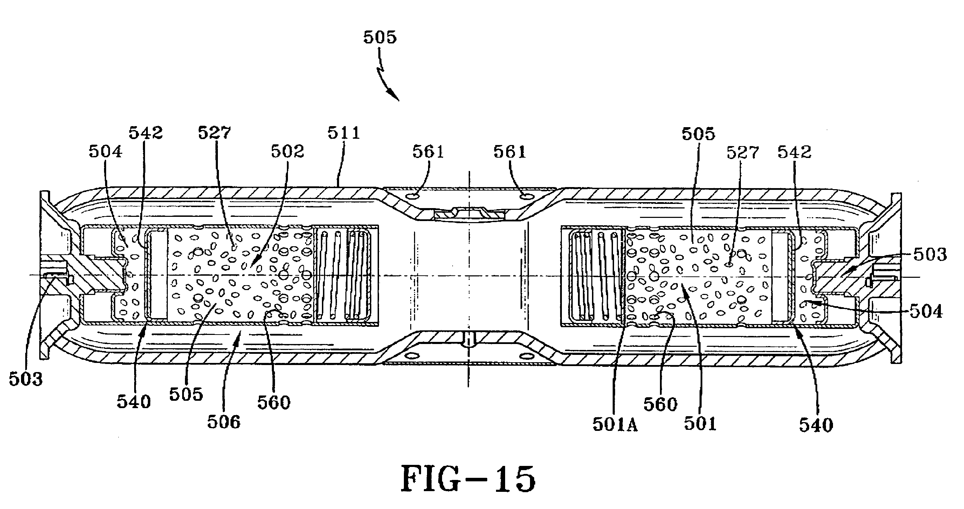

An exemplary airbag 10 according to the present invention was manufactured and tested. The exemplary airbag had an overall width of 500 mm and an overall height of 650 mm with a 250 mm long recess 20 having a width of 120 mm and a depth ranging from 180 mm at the top of the recess to 235 mm at the bottom. The exemplary airbag was deployed using an inflator of the type shown in FIG. 15. This exemplary inflator is disclosed in United States Patent Application Serial No. 11/241,222 filed 03 October 2005. The exemplary inflator 505 has an inflator housing 511 filled with a pressurized inert gas 506 and one or more gas heaters 501, 502 connected at an end of the inflator housing 511. At least one of the gas heaters 501, 502 has an outer shell defining the heater housing 501 a having a plurality of holes 560 in it. A generant charge 527 is stored in a gas generating chamber 505. The gas generating chamber 505 and the inflator housing 511 communicate with each other through the holes 560. An ignitor 503 is connected to the gas heater 2 and is located at an end of the inflator housing 511. An enhancer storage chamber 504 is disposed between the ignition means 503 and the gas heater 501, 502. The enhancer storage chamber 504 is located between the gas generating chamber 505 and the ignition means 503 and is separated from the gas generating chamber 505 by a bulkhead 540. The bulkhead 540 has openings 542 leading to the gas generating chamber 505. Gas exits the inflator through passageways 561 in the inflator housing 511, then passes through the opening in the airbag to enter the inflatable chamber. This exemplary inflator 305 is a multistage type hybrid inflator that was successfully used in an evaluation test of an airbag 10 according to the present invention.

FIGS. 5A - 5G and 6A - 6G show the airbag panels may be separate fabric components that are attached or sewn together. Alternatively the fabric can be made by knitting or weaving wherein the individual components are formed simultaneously or as a unitary knitted structure having a top, front, bottom and sides with a vertically extending recessed portion 22 on the lower portion of the airbag 10 similar if not identical to the sewn panel type airbag.

An airbag according to the present invention may be a part of an airbag module 310 having a module housing 303. An inflator 305 is inside the module housing 303 and an airbag 10 according to the present invention is attached to the module housing 303 and may be folded inside the module 310.

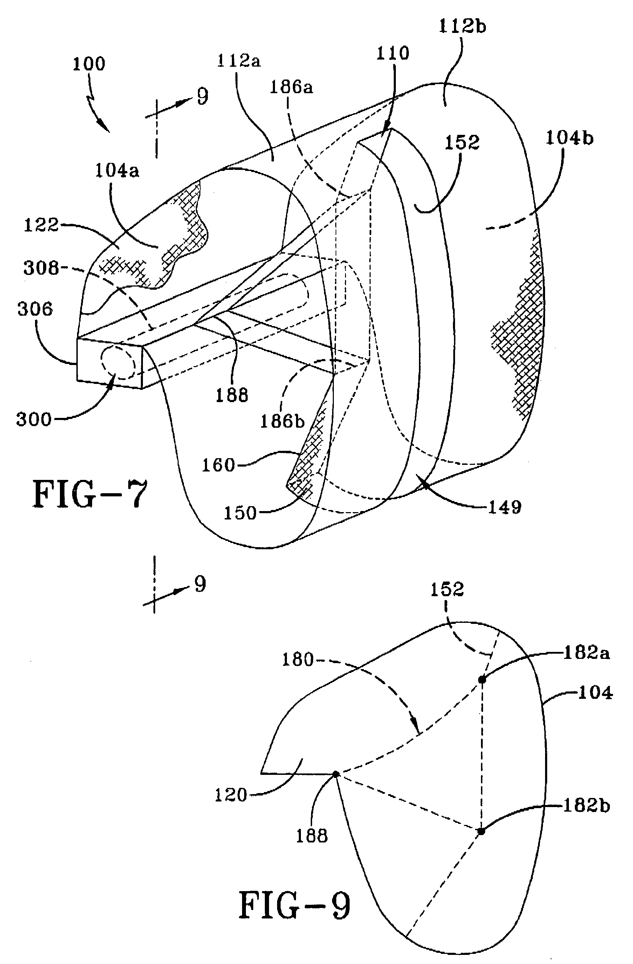

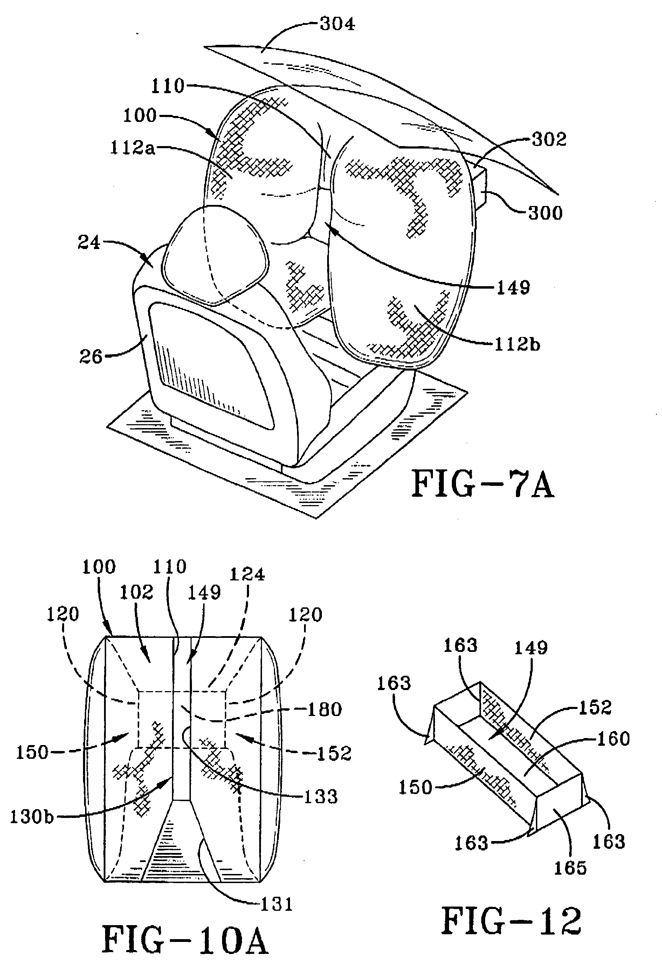

Referring to FIGs. 7-12, the airbag of the present invention airbag is a refinement of an airbag disclosed in an earlier filed priority application US 11/252426 filed 17 October 2005 entitled "Grooved Air Bag".

The airbag 100 shown in FlGs. 7, 7A, 8 and 9 has a main panel 102 having a face panel portion 103, which faces a vehicle occupant, and a plurality of side panels 104a, 104b. Each of these panels is made typically from woven airbag fabric comprising nylon or polyester. The side panels 104a, 104b are substantially identical and are the mirror image of each other. Each of the side panels 104a, 104b includes a neck portion 120 and a cushion portion 122, The main panel has a pair of opposing neck portions 124 and a cushion portion 126; the face panel portion mentioned above is part of the cushion portion 126. The cushion portion, in the vicinity of the face panel portion 103 includes an opening 130, which as will described below is used to form a recess in the inflated airbag 100. The airbag is formed by sewing an edge 132 of the side panel 104a to an edge 134 of the main panel 102. An edge 132 of the other side panel 104b is sewn to an edge 134a of the main panel 102 in a known manner providing the airbag 100 with its general shape. An inflator 308 is positioned within the neck of the airbag. The airbag is folded and stored in a housing 306 of an airbag module 300 of which the airbag 100 is a part.

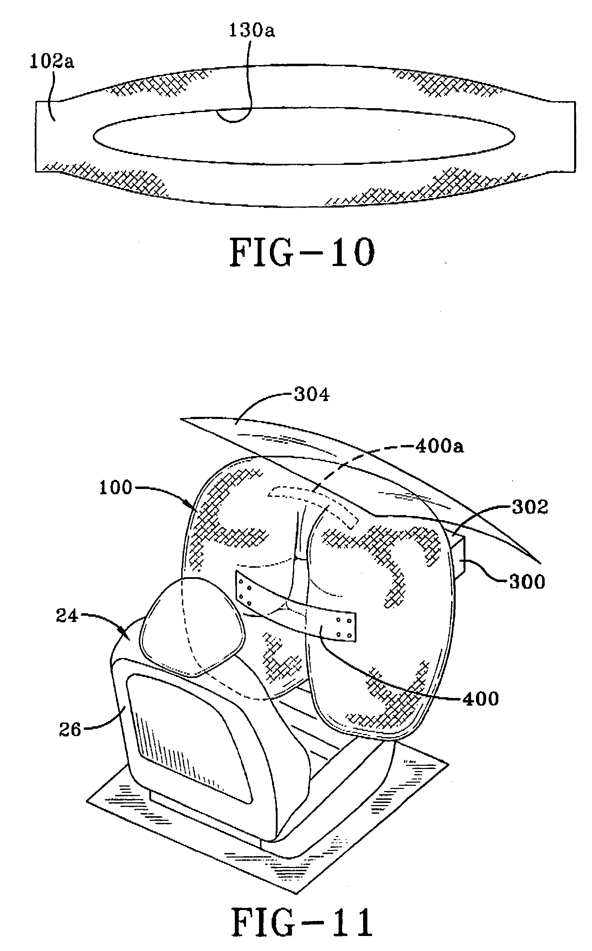

An opening 130 in the main panel 102 has one or more edges 140a, 140b, 140c, 140d. Even though the opening 130 is shown as rectangular, the opening 130 can be oblong, as shown in FIG. 10, which shows an alternate face panel 102a with an oval opening 130a. The opening 130b in the face panel portion can be a hybrid shape, for example a combination of trapezoidal or triangular 131 and rectangular 131a in shape, as shown in FIG. 10A, to minimize impact with a child or small adult in an out-of-position seating position with their head or chest on or very close to the cover of the airbag module.

The airbag 100 includes a concave or cup shaped structure 149 of fabric fitted within the opening 130 and sewn or otherwise secured to the edges 140a -140d of the main panel opening 130. The cup shaped structure 149 is located within the airbag below the exterior surface of the main panel and is used, in cooperation with a tether and other panels of fabric, to create a groove or recess 110 between opposing lobe portions 112a, 112b. The cup shaped structure 149 is formed by a shaped, single panel or by sewing one or more panels of fabric to the edges 140a -140d of the opening 130.

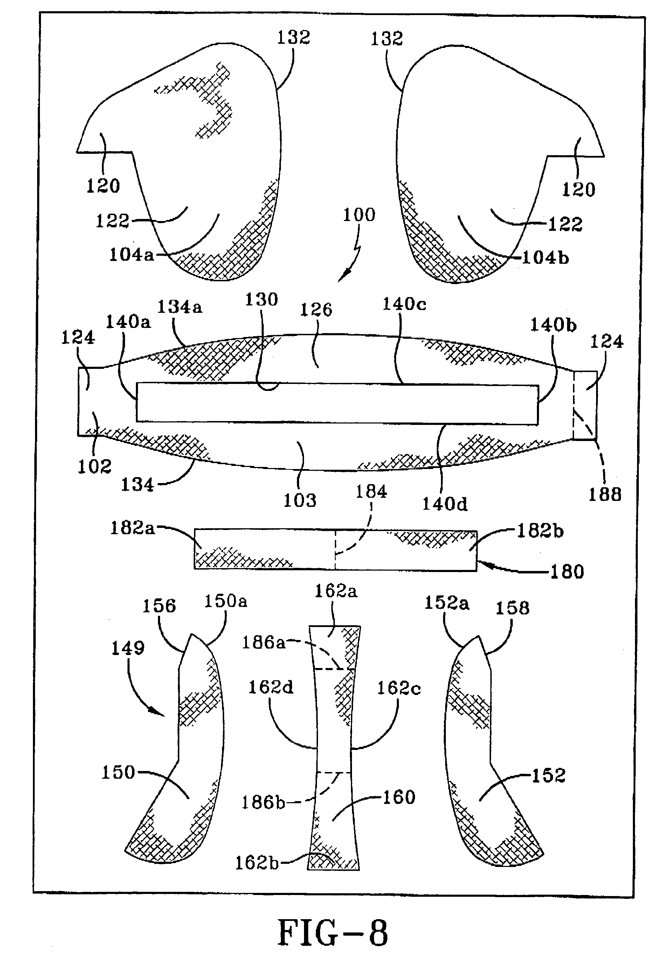

In FIG. 8 an airbag 100 includes a left recess panel 150 and a right recess panel 152. An edge 150a of the left recess panel 150 is sewn to an edge 140d of the opening 130 in the main panel, while an edge 152a or the right recess panel 152 is sewn to another edge 140c of the opening 130 in main panel 102. Both the left recess panel 150 and right recess panel 152 has a respective side edge 156, 158 opposite edges 150a, 152a. When the side panels 150, 152 are sewn to the edges of the opening 130 of the main panel 102, they provide depth to the opening 130, as well as to openings 130a, 130b. The airbag 100 further includes a center recess panel 160 having edges 162a, 162b, 162c, 162d. In general the center recess panel will follow the shape of the opening 130, 130a, 130b in the main panel. An edge 162d of the center recess panel is sewn to an edge 156 of the left recess panel 150, while another edge 162c of the center recess panel is sewn to edge 158 of the right recess panel 152. An edge 162a of the center recess panel is sewn to an edge 140a of the opening in the main panel, and another edge 162b of the center recess panel is sewn to an edge 140b of the opening in the main panel. The panels 150, 152, 160 form the cup shaped or concave structure. The concave shape of structure 149 can be formed, for example, by creating pleats 163 positioned about a flat piece of fabric 165.

If the cup shaped structure 149 including the three recess panels 150, 152, 160, after being sewn to the main panel 102, is pushed rearward through the opening 130 in the main panel, a recessed structure, that is, recess 110 is formed. If the motion of one or more of the panels 150, 152, 160 is not restrained as the airbag inflates, this concave structure 149, upon inflation of the airbag, will balloon outwardly in front of the face panel. To prevent this ballooning, the airbag 100 includes one or more tethers 180. FIG. 8 illustrates one tether. The tether 180 is a panel having opposed edges 182a, 182b and an intermediate point 184. The tether 180 can be secured to a portion of the module 300 such as a housing 306.

FiGs. 7, 8 and 9 illustrate the placement and location of the tether 180 in relation to the other panels forming the airbag 100. FIG. 8 illustrates, in regard to panel 160, dotted lines 186a, 186b, the connection line or seam at which edges 182a, 182b of the tether 180 are respectively sewn to the recess center panel 160. FIG. 8 also has another dotted line 188 to which the intermediate line or section 184 of the tether 180 is sewn. Upon inflation of the airbag, the tether 180 is stressed, thereby preventing the center recess panel 160, or in general the center of the structure 149, from moving outwardly relative to the lobe portions 112a, 112b. This creates the groove or space 110 between the lobe portions 112a, 112b and permits the lobe portions 112a, 112b to inflate. FIG. 7A show the typical inflated shape of the airbag 100. In FIG. 7A the airbag 100 is part of a top-mount airbag module 300. The module 300 is placed, in a known manner, adjacent to the top surface of an instrument panel 302 shown in phantom line. Upon inflation of the airbag the module's cover is forced open and the airbag inflates upwardly toward the windscreen 304 and forwardly toward the seated vehicle occupant. In FIG. 7A the vehicle occupant is not shown, however, the vehicle 24 is shown.

As the airbag 100 initially deploys, the spacing between the inflating lobe portions 112a, 112b might increase in size greater than the steady state spacing. FIG. 11 shows a tether 400, preferably made of the same fabric as the airbag, located on the face portion 103 of the main panel 102, which joins the two lobe portions 112a, 112b and serves to limit the spacing of the lobe portions during and after inflation. The material chosen for the tether, instead of being airbag fabric, could for example be a length of woven seat belt webbing or any material capable of absorbing a tensile load. In one embodiment a tether 400a joins the tops of both lobe portions and is shown in phantom line and with the airbag inflated will in general extend horizontally between the lobe portions. In the preferred embodiment the tether 400 joins opposing middle parts of the lobe portions. In general the lower tether 400 is positioned to be below the chest of a 6 year old vehicle occupant when seated in an Out -of - Position location with his chest on the cover of the airbag module, as well as below the neck of the normally seated 50^{th} percentile adult vehicle occupant.

## Claims

1. A passenger side airbag arrangement comprising an airbag (10; 100) and an instrument panel from which the airbag deploys, said airbag comprising: a single inflatable chamber (301) defined by a main panel (12; 102) and pair of side panels (14, 16; 104a; 104b) integral to or otherwise attached along edges of the main panel (12; 102) wherein the main panel has a top portion, a front portion and a bottom portion and the inflatable chamber (301) has a gas inlet passageway (30) anchored at an end for allowing inflation gases to enter the inflatable chamber (301), a vertically oriented recessed portion (20) on the main panel (12; 102) extending from the front portion of the main panel (12; 102) to and at least partially into the bottom portion of the main panel (12; 102) and dividing the inflatable chamber (301) into two lobe portions (40, 42), an internal tether (50; 180) attached to the recessed portion (20) and anchored at the gas inlet passageway (30) to limit forward movement of the recessed portion (20) upon inflation of the inflatable chamber (301); and wherein the recessed portion (20) comprises a center recess panel (22; 160) and a pair of side recess panels (24, 26; 23, 25), the edges of the side recess panels being attached to or integrally formed with lateral edges of an opening (11; 130) in the front portion of the main panel (12; 102) and the center recess panel (22; 160) being attached to or integrally formed with upper and lower ends of the opening (11; 130) and to edges of each side panel to form the recessed portion (20); **characterized by** the vertically oriented recessed portion (20) beginning at or below a vertical location equal or less than a vertical location of the gas inlet passageway (30) when the airbag is deployed from said instrument panel.

2. An airbag (10; 100) according to claim 1 wherein the tether (50; 180) is attached to the center recess panel (22; 160) at a location about halfway between the upper and lower ends of the center recess panel.

3. An airbag (10; 100) according to either of claims 1 or 2 further comprising a second internal tether (52) attached to the top portion of the main panel (12; 102) and anchored at the gas inlet passageway (30) thereby limiting forward movement of an upper portion of the inflatable chamber (301).

4. An airbag (10; 100) according to claim 2 wherein the length of the second internal tether (52) is greater than or equal to the sum of the length of the tether (50) attached to the center recess panel (22; 160) and the distance from the location the tether is attached to the center recess panel (22; 160) to the main panel (12; 102) extending along the side panels.

5. An airbag (10; 100) according to any of claim 3 further comprising an internal diffuser element, the diffuser element being attached at two ends of the main panel (12; 102) and spanning across the gas inlet passageway (30) to redirect incoming inflation gases toward each side panel.

6. An airbag (10; 100) according to any of claim 1 wherein the recessed portion (20) has a maximum depth as measured along one of the side recess panels (24, 26; 23, 25) at or below a vertical mid point of the side recess panel.

7. An airbag (10; 100) according to any of claims 1 - 6 wherein the recessed portion (20) has a width when the airbag is inflated of at least 25% of the width of the front portion of the main panel (12; 102).

## Patentansprüche

1. Seitenairbaganordnung für Insassen, die einen Airbag (10; 100) und ein Armaturenbrett aufweist, von dem aus sich der Airbag entfaltet, wobei der Airbag aufweist: eine einzelne aufblasbare Kammer (301), die durch eine Hauptbahn (12; 102) und ein Paar Seitenbahnen (14, 16; 104a; 104b) definiert wird, die zusammenhängend mit der oder anderweitig entlang der Ränder der Hauptbahn (12; 102) befestigt sind, wobei die Hauptbahn einen oberen Abschnitt, einen vorderen Abschnitt und einen unteren Abschnitt aufweist, und wobei die aufblasbare Kammer (301) einen Gaseintrittsdurchgang (30) aufweist, der an einem Ende verankert ist, damit Aufblasgase in die aufblasbare Kammer (301) gelangen können, wobei sich ein vertikal ausgerichteter ausgesparter Abschnitt (20) im in der Hauptbahn (12; 102) vom vorderen Abschnitt der Hauptbahn (12; 102) zum und mindestens teilweise in den unteren Abschnitt der Hauptbahn (12; 102) erstreckt und die aufblasbare Kammer (301) in zwei Flügelabschnitte (40, 42) unterteilt, wobei ein innerer Tether (50; 180) am ausgesparten Abschnitt (20) befestigt und am Gaseintrittsdurchgang (30) verankert ist, um die Vorwärtsbewegung des ausgesparten Abschnittes (20) beim Aufblasen der aufblasbaren Kammer (301) zu begrenzen; und wobei der ausgesparte Abschnitt (20) eine mittlere ausgesparte Bahn (22; 160) und ein Paar seitliche ausgesparte Bahnen (24, 26; 23, 25) aufweist, wobei die Ränder der seitlichen ausgesparten Bahnen an den seitlichen Rändern einer Öffnung (11; 130) im vorderen Abschnitt der Hauptbahn (12; 102) befestigt oder zusammenhängend damit ausgebildet sind, und wobei die mittlere ausgesparte Bahn (22; 160) am oberen und unteren Ende der Öffnung (11; 130) und an den Rändern einer jeden seitlichen Bahn befestigt oder zusammenhängend damit ausgebildet ist, um den ausgesparten Abschnitt (20) zu bilden; **gekennzeichnet dadurch, dass** der vertikal ausgerichtete ausgesparte Abschnitt (20), der an einer vertikalen Stelle oder unterhalb davon beginnt, gleich oder kleiner ist als eine vertikale Stelle des Gaseintrittsdurchganges (30), wenn der Airbag aus dem Armaturenbrett entfaltet wird.

2. Airbag (10; 100) nach Anspruch 1, bei dem der Tether (50; 180) an der mittleren ausgesparten Bahn (22; 160) an einer Stelle etwa in der Hälfte zwischen dem oberen und dem unteren Ende der mittleren ausgesparten Bahn befestigt ist.

3. Airbag (10; 100) nach entweder Anspruch 1 oder 2, der außerdem einen zweiten inneren Tether (52) aufweist, der am oberen Abschnitt der Hauptbahn (12; 102) befestigt und am Gaseintrittsdurchgang (30) verankert ist, wodurch die Vorwärtsbewegung eines oberen Abschnittes der aufblasbaren Kammer (301) begrenzt wird.

4. Airbag (10; 100) nach Anspruch 2, bei dem die Länge des zweiten inneren Tethers (52) größer als oder gleich der Summe der Länge des Tethers (50), der an der mittleren ausgesparten Bahn (22; 160) befestigt ist, und des Abstandes von der Stelle des Tethers, an der der Tether an der mittleren ausgesparten Bahn (22; 160) befestigt ist, bis zur Hauptbahn (12; 102) ist, die sich längs der Seitenbahnen erstreckt.

5. Airbag (10; 100) nach Anspruch 3, der außerdem ein inneres Diffusorelement aufweist, wobei das Diffusorelement an zwei Enden der Hauptbahn (12; 102) befestigt ist und den Gaseintrittsdurchgang (30) überbrückt, um die ankommenden Aufblasgase in Richtung einer jeden Seitenbahn umzuleiten.

6. Airbag (10; 100) nach Anspruch 1, bei dem der ausgesparte Abschnitt (20) eine maximale Tiefe aufweist, gemessen längs einer der seitlichen ausgesparten Bahnen (24, 26; 23, 25) in der oder unterhalb einer vertikalen Mitte der seitlichen ausgesparten Bahn.

7. Airbag (10; 100) nach einem der Ansprüche 1 bis 6, bei dem der ausgesparte Abschnitt (20) eine Breite, wenn der Airbag aufgeblasen ist, von mindestens 25 % der Breite des vorderen Abschnittes der Hauptbahn (12; 102) aufweist.

## Revendications

1. Assemblage de coussin d'air du côté passager, comprenant un coussin d'air (10 ; 100) et un tableau de bord à partir duquel le coussin d'air se déploie, ledit coussin d'air comprenant : une seule chambre gonflable (301), définie par un panneau principal (12 ; 102) et une paire de panneaux latéraux (14, 16 ; 104a, 104b) faisant partie intégrante du panneau principal (12 ; 102) ou fixés d'une autre manière sur celui-ci, dans lequel le panneau principal comporte une partie supérieure, une partie avant et une partie inférieure, la chambre gonflable (301) comportant un passage d'entrée des gaz (30) ancré au niveau d'une extrémité, pour permettre l'entrée des gaz de gonflement dans la chambre gonflable (301), une partie évidée à orientation verticale (20) sur le panneau principal (12 ; 102), s'étendant de la partie avant du panneau principal (12 ; 102) vers la partie inférieure du panneau principal (12 ; 102) et au moins partiellement dans celui-ci, et divisant la chambre gonflable (301) en deux parties de lobe (40, 42), une attache interne (50 ; 180), fixée sur la partie évidée (20) et ancrée au niveau du passage d'entrée des gaz (30) afin de limiter le déplacement vers l'avant de la partie évidée (20) lors du gonflement de la chambre gonflable (301) ; et dans lequel la partie évidée (20) comprend un panneau à évidement central (22 ; 160) et une paire de panneaux à évidement latéraux (24, 26 ; 23, 25), les bords des panneaux à évidement latéraux étant fixés sur les bords latéraux d'une ouverture (11 ; 130) dans la partie avant du panneau principal (12 ; 102) ou faisant partie intégrante de ceux-ci, le panneau à évidement central (22 ; 160) étant fixé sur les extrémités supérieure et inférieure de l'ouverture (11 ; 130) et sur les bords de chaque panneau latéral, ou faisant partie intégrante de ceux-ci, pour former la partie évidée (20) ; caractérisé en en ce que la partie évidée à orientation verticale (20) commence au niveau d'un emplacement vertical ou au-dessous de celui-ci, égal ou inférieur à un emplacement vertical du passage d'entrée des gaz (30) lorsque le coussin d'air est déployé à partir dudit tableau de bord.

2. Coussin d'air (10 ; 100) selon la revendication 1, dans lequel l'attache (50 ; 180) est fixée sur le panneau à évidement central (22 ; 160) au niveau d'un emplacement situé environ à mi-chemin entre les extrémités supérieure et inférieure du panneau à évidement central.

3. Coussin d'air (10 ; 100) selon les revendications 1 ou 2, comprenant en outre une deuxième attache interne (52), fixée sur la partie supérieure du panneau principal (12 ; 102) et ancrée au niveau du passage d'entrée des gaz (30), limitant ainsi le déplacement vers l'avant d'une partie supérieure de la chambre gonflable (301).

4. Coussin d'air (10 ; 100) selon la revendication 2, dans lequel la longueur de la deuxième attache interne (52) est supérieure ou égale à la somme de la longueur de l'attache (50) fixée sur le panneau à évidement central (22 ; 160) et de la distance entre l'emplacement au niveau duquel l'attache est fixée sur le panneau à évidement central (22 ; 160) et le panneau principal (12 ; 102), s'étendant le long des panneaux latéraux.

5. Coussin d'air (10 ; 100) selon la revendication 3, comprenant en outre un élément diffuseur interne, l'élément diffuseur étant fixé au niveau de deux extrémités du panneau principal (12 ; 102) et s'étendant à travers le passage d'entrée des gaz (30) pour rediriger les gaz de gonflement entrants vers chaque panneau latéral.

6. Coussin d'air (10 ; 100) selon la revendication 1, dans lequel la partie évidée (429) a une profondeur maximale, mesurée le long de l'un des panneaux à évidement latéraux (24, 26 ; 23, 25), au niveau d'un point central vertical du panneau à évidement latéral ou au-dessous de celui-ci.

7. Coussin d'air (10 ; 100) selon l'une quelconque des revendications 1 à 6, dans lequel la partie évidée (20) a une largeur représentant au moins 25% de la largeur de la partie avant du panneau principal (12 ; 102) lorsque le coussin d'air est gonflé.
